(19) Europäisches Patentamt
European Patent Office
Office européen des brevets

(11) EP 2 272 139 B1

(12) # EUROPÄISCHE PATENTSCHRIFT

(45) Veröffentlichungstag und Bekanntmachung des Hinweises auf die Patenterteilung:
**21.11.2018 Patentblatt 2018/47**

(21) Anmeldenummer: **09742088.9**

(22) Anmeldetag: **06.05.2009**

(51) Int Cl.:
***H01S 3/00*** *(2006.01)* ***H01S 3/08*** *(2006.01)*
***G02B 26/08*** *(2006.01)* *H01S 3/106 (2006.01)*

(86) Internationale Anmeldenummer:
**PCT/EP2009/055465**

(87) Internationale Veröffentlichungsnummer:
**WO 2009/135870 (12.11.2009 Gazette 2009/46)**

(54) **PULSSHAPER UND LASER MIT PULSSHAPER**

PULSE SHAPER AND LASER WITH PULSE SHAPER

DISPOSITIF DE MISE EN FORME D'IMPULSIONS ET LASER INTÉGRANT UN TEL DISPOSITIF

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **06.05.2008 DE 102008022724**

(43) Veröffentlichungstag der Anmeldung:
**12.01.2011 Patentblatt 2011/02**

(73) Patentinhaber: **Freie Universität Berlin
14195 Berlin (DE)**

(72) Erfinder:
- **HEYNE, Karsten
14979 Großbeeren (DE)**
- **HARTMANN, Mathias
12351 Berlin (DE)**
- **MOLKENTHIN, Klaus
12057 Berlin (DE)**

(74) Vertreter: **Maikowski & Ninnemann
Patentanwälte Partnerschaft mbB
Postfach 15 09 20
10671 Berlin (DE)**

(56) Entgegenhaltungen:
**EP-A- 1 237 308** **WO-A-2005/048419**
**US-A- 5 513 194** **US-A- 5 526 171**
**US-A1- 2002 024 015**

- **MARTINEZ O E ET AL: "NEGATIVE GROUP-VELOCITY DISPERSION USING REFRACTION" JOURNAL OF THE OPTICAL SOCIETY OF AMERICA A, OPTICAL SOCIETY OF AMERICA, US, Bd. 1, Nr. 10, 1. Oktober 1984 (1984-10-01), Seiten 1003-1006, XP000709392 ISSN: 1084-7529**
- **LEMOFF B E ET AL: "CUBIC-PHASE-FREE DISPERSION COMPENSATION IN SOLID-STATE ULTRASHORT-PULSE LASERS" OPTICS LETTERS, OSA, OPTICAL SOCIETY OF AMERICA, WASHINGTON, DC, US, Bd. 18, Nr. 1, 1. Januar 1993 (1993-01-01), Seiten 57-59, XP000328277 ISSN: 0146-9592**
- **FECKO C J ET AL: "Generation of 45 femtosecond pulses at 3 mum with a KNbO3 optical parametric amplifier" OPTICS COMMUNICATIONS, NORTH-HOLLAND PUBLISHING CO. AMSTERDAM, NL, Bd. 241, Nr. 4-6, 16. November 2004 (2004-11-16), Seiten 521-528, XP004614515 ISSN: 0030-4018 in der Anmeldung erwähnt**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 272 139 B1

**Beschreibung**

Die vorliegende Erfindung betrifft einen Pulsshaper gemäß Anspruch 1 sowie insbesondere auch einen Laser mit einem derartigen Pulsshaper.

Der Einsatz eines Pulsshapers ist gewöhnlich für ultrakurze Lichtimpulse mit einem breiten Frequenzspektrum vorgesehen. Ziel eines Pulsshapers ist es, individuelle spektrale Anteile des Lichtimpulses gegenüber den anderen zeitlich, räumlich oder polarisationsabhängig zu manipulieren.

Es sind Vorrichtungen bekannt, die es erlauben, Wellenlängen separat zu beeinflussen (z.B. LCD-Maske, AOM). Die überwiegende Zahl der Pulsshaper benutzt ein dispersives optisches Element, mit dem die Wellenlängen aufgespalten und somit zugänglich gemacht werden. Das hat den Nachteil, dass die Gesamtenergie des Lichtimpulses durch Reflexionsverluste am dispersiven optischen Element reduziert wird.

Durch die dispersive Aufspaltung der Wellenlängen in verschiedene Raumrichtungen kann über unterschiedliche Laufwege für verschiedene Wellenlängen eine zeitliche Formung und Kompression des Lichtpulses erfolgen. Das hat zwingend zur Folge, dass die Strahlrichtung verändert wird. Außerdem ist der zusätzlich benötigte Strahlenweg, um den Lichtpuls zu formen, lang und liegt typischerweise im sichtbaren Spektralbereich zwischen 30 und 300 cm. Im nahinfraroten und mittleren infraroten Spektralbereich nimmt diese Länge noch zu. Das beeinflusst die Stabilität eines optischen Aufbaus negativ, da der Pointingfehler mit längerem Strahlweg zunimmt.

Weiterhin ist es im mittleren infraroten Spektralbereich (zwischen 2500 - 30000 nm) schwierig, Pulsshaper im Resonator eines IR-Lasers zu justieren, da der dispergierte Lichtstrahl nicht sichtbar gemacht werden kann. Als Folge davon und der Tatsache, dass die optischen Materialien im infraroten Spektralbereich zum Teil nicht transparent für sichtbares Licht sind, werden Pulsshaper im mittleren infraroten Spektralbereich kaum eingesetzt.

Eine Alternative ist der Einsatz eines AOM (Akusto-optischer Modulator), der es ermöglicht, Amplitude und Phase des infraroten Lichtimpulses zu formen. Hierbei gibt es allerdings Begrenzungen für den Durchmesser des Lichtstrahles sowie die Intensität, die bei ultrakurzen Pulsen sehr hoch sein kann. Zudem sind AOMs sehr teuer.

Weiterhin ist es aus C.J. Fecko et al. Optics Communications, 241 (2004), 521-528 bekannt, den Infrarotlichtimpuls im mittleren infraroten Spektralbereich mit Hilfe von planparallelen Platten verschiedener Materialien auf einfache Art zu shapen. Hierbei wird die GVD (group velocity dispersion) verschiedener Materialien im infraroten Spektralbereich ausgenutzt, um dem Lichtimpuls einen (nahezu) linearen positiven oder negativen Chirp aufzuprägen.

Nachteilhafterweise können die planparallelen Platten nicht in einfacher Weise kontinuierlich in ihrer optischen Dicke variiert werden, ohne dass sich die Strahlrichtung ändert (z.B. beim Verkippen der Platten). Ein weiterer Nachteil besteht darin, dass Materialien, die im mittleren infraroten Spektralbereich transparent sind, regelmäßig einen hohen Brechungsindex für diesen Spektralbereich aufweisen, so dass der Lichtstrahl selbst beim Verkippen einer planparallelen Platte derart stark zum Lot gebrochen würde, dass die optische Weglängenänderung nur unzureichend groß wäre. Die daraus resultierenden notwendigen Dicken bzw. Kippwinkel würden einerseits zu einer unerwünscht hohen Absorption innerhalb der Platte und andererseits zu einer unerwünscht hohen Reflexion aufgrund der resultierenden Einfallswinkel führen.

Zusätzlich geht der Einsatz mehrerer planparalleler Platten mit höheren Reflexionsverlusten einher, was die Gesamtintensität des Lichtimpulses verringert.

Die EP 1 237 308 A2 offenbart eine Vorrichtung zur Dispersionskompensation mit einem dispersionsausgleichenden dreidimensionalen Spiegel.

Darüber hinaus ist aus der US 2002/0024015 A1 eine Anordnung zum Anregen von fluoreszierenden Markern bekannt, die keilförmige Elemente zur Lichtbeeinflussung aufweist.

Zudem beschreibt die US 5 513 194 einen Laser mit dispersiven Wellenleitersegmenten zum Beeinflussen der Gruppengeschwindigkeitsdispersion.

Es ist daher Aufgabe der vorliegenden Erfindung, einen Pulsshaper für Lichtpulse - insbesondere für Lichtpulse im mittleren infraroten Spektralbereich - anzugeben, der kostengünstig herstellbar und zudem einfach justierbar ist. Weiterhin soll der erfindungsgemäße Pulsshaper eine geringe Störanfälligkeit besitzen und auf aktive Baugruppen wie beispielsweise bei einem AOM verzichten.

Eine weitere Aufgabe der Erfindung besteht darin, einen Laser für ultrakurze Lichtimpulse anzugeben, der eine breitbandige Kompensation von Gruppenlaufzeiteffekten bei einem vergleichsweise preiswerten und kompakten Aufbau realisiert.

Diese Aufgaben werden erfindungsgemäß durch einen Pulsshaper mit den in Anspruch 1 genannten Merkmalen sowie durch einen Laser mit den im Anspruch 11 genannten Merkmalen gelöst. Bevorzugte Ausgestaltungen der Erfindung sind in den abhängigen Ansprüchen enthalten.

Danach wird ein Pulsshaper bereitgestellt, mit

- einem ersten und einem zweiten dispersiven Element, wobei
- ein optischer Puls entlang einer Einkoppelrichtung so in den Pulsshaper einkoppelbar ist, dass er nach Durchlaufen des ersten und des zweiten dispersiven Elementes entlang einer Austrittsrichtung aus dem Pulsshaper austritt, und
- das erste und das zweite dispersive Element so ausgebildet und relativ zueinander bewegbar angeordnet sind, dass die von dem optischen Puls nach Einkoppeln in den Pulsshaper durch das erste und das zweite dispersive Element hindurch zurückzulegende Weglänge einstellbar ist, ohne dass ein (durch die Dispersionseigenschaften des ersten und des zweiten dispersive Elementes bedingter) Versatz zwischen der Einkoppelrichtung und der Austrittsrichtung verändert wird,

- wobei das erste und das zweite dispersive Element jeweils in Form eines Keils ausgebildet sind.

Zudem sind das erste und das zweite dispersive Element so angeordnet, dass die Form des optischen Pulses beim Durchlaufen des Pulsshapers eine Veränderung erfährt, die hauptsächlich oder ausschließlich durch die beim Durchlaufen des ersten und/oder des zweiten dispersive Elementes auftretende Gruppengeschwindigkeitsdispersion hervorgerufen wird; wobei das erste und das zweite dispersive Element ein erstes Paar bilden und der Pulsshaper zudem ein zweites Paar jeweils in Form eines Keils ausgebildeter dispersiver Elemente aufweist,

Der erfindungsgemäße Pulsshaper formt den optischen Puls somit nicht dadurch, dass er unterschiedliche Laufwege für unterschiedliche Wellenlängenkomponenten des Pulses generiert, sondern dadurch, dass die Materialien der beiden dispersiven Elemente derartige Dispersionseigenschaften haben, dass die Pulsform im Wesentlichen allein durch die Gruppengeschwindigkeitsdispersion beim Durchlaufen des Pulses durch die dispersiven Elemente verändert wird. Das Durchlaufen des Zwischenraumes zwischen den dispersiven Elementen spielt keine oder nur eine untergeordnete Rolle für die Veränderung der Pulsform. Dass die Pulsformänderung "hauptsächlich" auf die Gruppengeschwindigkeitsdispersion zurückgeht, bedeutet z.B., dass mindestens die Hälfte der Veränderung der zeitlichen Halbwertsbreite des Pulses durch die Gruppengeschwindigkeitsdispersion beim Durchlaufen des ersten und/oder zweiten dispersiven Elementes hervorgerufen wird und entsprechend weniger als die Hälfte (des Betrages) der Veränderung der Halbwertsbreite durch Laufzeiteffekte entsteht.

Zu dem Fachbegriff "Gruppengeschwindigkeitsdispersion" wird folgendes angemerkt: Die Dispersionseigenschaften (d.h. die Wellenlängenabhängigkeit des Brechungsindex) eines Materials führen i.a. dazu, dass nicht nur die Phasengeschwindigkeit einer optischen Welle, sondern auch deren Gruppengeschwindigkeit (d.h. die Geschwindigkeit, mit der sich eine Amplitudeneinhüllende der Welle bewegt) wellenlängenabhängig ist. Die Wellenlängenabhängigkeit der Gruppengeschwindigkeit beim Durchlaufen eines dispersiven Materials wird als Gruppengeschwindigkeitsdispersion ("group velocity dispersion" - GVD) bezeichnet. Die GVD kann insbesondere den Effekt haben, dass sich die Form (d.h. der Verlauf der Amplitudeneinhüllenden) eine optischen Pulses beim Durchlaufen eines Materials verändert, der Puls z.B. zeitlich verbreitert wird.

Zur Charakterisierung der Dispersionseigenschaften eines Materials wird insbesondere der Parameter D verwendet, der sich wie folgt aus der zweiten Ableitung des Brechungsindexverlaufs ergibt:

$$D = -\frac{\lambda}{c}\frac{d^2 n}{d\lambda^2}$$

Hierbei bezeichnet λ die Wellenlänge des Pulses, n den (wellenlängenabhängigen) Brechungsindex des Materials und c die Lichtgeschwindigkeit.

Weist ein Material einen Dispersionsparameter D mit einem negativen Vorzeichen auf, spricht man von positiver Dispersion, die zu einer zeitlichen Verbreiterung eines das Material durchlaufenden Pulses führt. Bei positivem Vorzeichen von D spricht man entsprechend von negativer Dispersion.

Insbesondere kann für das erste und das zweite Material des ersten bzw. des zweiten dispersiven Elementes ein negativ dispersives Material (z.B. ZnSe für Wellenlängen im Infrarotbereich oder Oxide wie MgO und Metamaterialien im sichtbaren oder ultravioletten Spektralbereich) gewählt werden, um eine Pulsverbreiterung infolge einer positiven Gruppengeschwindigkeitsdispersion eines optischen Aufbaus, den der Puls durchläuft oder durchlaufen soll, zu kompensieren, d.h. um eine Pulskompression zu erzeugen. Beispielsweise sind das erste und das zweite Material identisch, wobei das Maß der Pulskompression (oder auch der Pulsaufweitung) durch Anpassung des optische Weges, den der Puls durch die beiden dispersiven Elemente zurücklegen muss, mittels Verschieben der dispersiven Elemente gegeneinander eingestellt wird.

Das erste und das zweite Material kann auch positiv dispersiv sein, um eine negative Gruppengeschwindigkeitsdispersion ausgleichen zu können. Darüber hinaus ist es auch denkbar, dass das erste und das zweite Material entgegengesetzte Dispersionseigenschaften haben, d.h. das erste Material ist ein negativ dispersives und das zweite Material ein positiv dispersives Material. Dies ermöglicht je nach Stellung der beiden dispersiven Elemente zueinander und relativ zum in den Pulsshaper eingekoppelten Lichtpuls eine Kompensation sowohl einer negativen als auch einer positiven Gruppengeschwindigkeitsdispersion.

Es werden zwei Paare dispersiver Elemente verwendet, wobei das eine Paar z.B. dispersive Elemente mit einem negativ dispersiven Material und das andere Paar dispersive Elemente mit einem positiv dispersiven Material aufweist. Dies ermöglicht eine besonders effiziente Kompensation sowohl einer negativen als auch einer positiven Gruppengeschwindigkeitsdispersion. Auf diese Ausgestaltung der Erfindung wird weiter unten noch eingegangen.

Ein möglicher Einsatz des erfindungsgemäßen Pulsshapers ist neben der Kompression von Lichtpulsen im nahen infraroten Spektralbereich auch die Kompression von Lichtpulsen z.B. im sichtbaren Spektralbereich. Ein Einsatz im sichtbaren Bereich erfordert insbesondere Materialien, die einen negativen GVD in diesem Spektralbereich aufweisen. Dies ist für manche Oxide wie MgO und für Metamaterialien der Fall. Damit kann der erfindungsgemäße Pulsshaper auch in optisch parametrischen Oszillatoren (OPO), optisch parametrischen Verstärkern (OPA) und nichtkollinearen optisch parametrischen Verstärkern (NOPA) eingesetzt werden. Ein weiterer Einsatz ist das Vorchirpen von Seedlicht, z.B. in OPAs oder NOPAs im sichtbaren, nahen infraroten und mittleren infraroten Spektralbereich.

Es wird darauf hingewiesen, dass das erste und/oder das zweite dispersive Element nicht zwingend einen Feststoff umfassen müssen. Es ist z.B. auch möglich, dass das erste und/oder das zweite dispersive Element einen Behälter aufweisen, der eine (insbesondere negativ) dispersive Flüssigkeit (oder ein Gas) enthält.

Es sei weiter erwähnt, dass beim Durchlaufen des Pulses durch das erste bzw. das zweite dispersive Element auch eine gewisse räumliche Aufspaltung verschiedener Wellenlängenkomponenten des Pulses, d.h. unterschiedliche Laufwege der Wellenlängekomponenten, entstehen kann. Allerdings haben diese geringfügig unterschiedlichen Laufwege der Wellenlängenkomponenten nur einen geringen und insbesondere nur einen vernachlässigbaren Effekt auf die Veränderung der Pulsform. In einem Ausführungsbeispiel der Erfindung sind die beiden dispersiven Elemente so zueinander angeordnet, dass die räumliche Aufspaltung der Wellenlängekomponenten nicht größer ist als die räumliche Ausdehnung des Pulses, d.h. den Durchmesser des Pulses nicht übersteigt.

Insbesondere werden hierbei zwei Wellenlängenkomponenten des Pulses betrachtet, von denen die eine Komponente eine Wellenlänge aufweist, die sich aus Vermindern der Zentralwellenlänge des Pulses um die halbe spektrale Halbwertsbreite des Pulses ergibt, und die andere Komponente eine Wellenlänge besitzt, die sich durch Erhöhen der Zentralwellenlänge des Pulses um die halbe spektrale Halbwertsbreite ergibt. Der räumliche Abstand dieser beiden Wellenlängekomponenten nach Durchlaufen des ersten und des zweiten dispersiven Elementes ist gemäß dieser Erfindungsvariante nicht größer als der Durchmesser des Lichtpulses.

Beispielsweise sind die beiden Keile des Pulsshapers mit einander parallel zugewandten Seitenflächen angeordnet, so dass der Abstand zwischen den Keilen konstant ist. Allerdings ist es prinzipiell auch denkbar, dass die einander zugewandten Seitenflächen der Keile unter einem Winkel zueinander verlaufen.

In einer Variante der Erfindung beträgt der größte Abstand zwischen den beiden dispersiven Elementen (d.h. insbesondere zwischen einander zugewandten Seitenflächen der dispersiven Elemente) maximal 20 cm, insbesondere maximal 10 cm, maximal 30 mm, maximal 15 mm oder maximal 1,5 mm, wobei der zusätzliche optische Weg beim Durchlaufen der dispersiven Elemente insbesondere 7 cm nicht übersteigt. Darüber hinaus können die dispersiven Elemente so relativ zueinander angeordnet sein, dass sie einen parallelen Versatz zwischen Einkoppelrichtung und Austrittsrichtung des Lichtpulses von maximal 1.5 mm (z.B. beim Einsatz von Germanium) hervorrufen. Bei Ausbildung der dispersiven Elemente in Keilform betragen die Keilwinkel insbesondere etwa 7°.

Beispielsweise weist das erste und/oder das zweite dispersive Element ein Material mit einer Absorption von weniger als 10 % je cm für elektromagnetische Strahlung im sichtbaren oder im mittleren in-fraroten Spektralbereich auf. Zudem können die dispersiven Elemente derart keilförmig ausgebildet und zueinander angeordnet sein, dass die Spitzen der Keile in entgegengesetzte Richtungen zeigen und sich einander zugewandte Seitenflächen der Keile mindestens teilweise gegenüberstehen.

Der Pulsshaper weist ein erstes Paar dispersiver Elemente (gebildet durch das erste und das zweite dispersive Element) und ein zweites Paar dispersiver Elemente auf, wobei z.B. die optische Dispersion (die Dispersionseigenschaften) des Materials der dispersiven Elemente eines Paars jeweils gleich ist und sich die optische Dispersion des Materials der dispersiven Elemente des ersten Paars von der optischen Dispersion des Materials der dispersiven Elemente des zweiten Paars unterscheiden kann. Die dispersiven Elemente können derart zueinander angeordnet sein, dass die Spitzen der Keile eines Keilpaars jeweils in entgegengesetzte Richtungen zeigen und sich die einander zugewandten Seitenflächen der Keile eines Keilpaars jeweils mindestens teilweise überlappen.

Vorzugsweise bestehen die dispersiven Elemente aus einem Material mit einer Absorption von weniger als 10 % je cm (noch bevorzugter weniger als 5% je cm und noch bevorzugter weniger als weniger als 1 % je cm) für elektromagnetische Strahlung im sichtbaren oder im mittleren infraroten Spektralbereich (2500 - 30000 nm). Dabei wird gefordert, dass das Material die genannten Absorptionseigenschaften vorzugsweise über einen Bereich von mindestens 50 Wellenzahlen, noch bevorzugter mindestens 500 Wellenzahlen und noch bevorzugter mindestens 1000 Wellenzahlen aufweist. Bei Verwendung des Pulsshapers in einem Laser soll der genannte Bereich als ein Bereich um die Zentralwellenlänge verstanden werden.

Beispielsweise können Energieverluste beim Durchlaufen des Pulsshapers im Gesamten unterhalb von 15 % liegen und sich insbesondere die Richtung des Strahlenganges durch den Einsatz des passiven Pulsshapers nicht ändern. Dazu werden z.B. zwei keilförmige Platten verwendet, deren Keilspitzen in entgegengesetzte Richtungen zeigen und gleichzeitig aufeinander zu oder voneinander weg verschoben werden. Mit zwei Paaren dispersiver Elemente (gemäß einer weiteren Ausführungsvariante) bleibt der Strahlengang unverändert bzw. nahezu unverändert. Die Materialien, die zum Einsatz kommen können sind vorzugsweise: Saphir, ZnSe, ZnS, Ge, Si, CaF2, BaF2, LiF, MgF,KRS-5, GaAs, KBr, KCl, NaCl, TiO2, CdTe, AMTIR (GeAsSe), Chalcogenide (AsSeTe), Diamant, Irtran, SiO2, MgO und Metamaterialien.

Gemäß einer weiteren Ausgestaltung der Erfindung sind das erste und das zweite dispersive Element an einem gemeinsamen Halter und/oder in einem gemeinsamen Rahmen angeordnet, d.h. die beiden dispersiven Elemente bilden eine gemeinsame Einheit. Der Halter bzw. der Rahmen weist z.B. Führungen auf, in denen die beiden dispersiven Elemente bewegbar gelagert sind. Insbesondere sind Führungen in Form von Linearführungen vorgesehen, in denen das erste und das zweite dispersive Element parallel zueinander verschoben werden können.

Darüber hinaus kann der Pulsshaper eine Verstellvorrichtung aufweisen, über die das erste und/oder das zweite dispersive Element verschoben werden können. Insbesondere kann die Verstellvorrichtung so ausgebildet sein, dass bei Betätigung der Verstellvorrichtung das erste und das zweite dispersive Element gleichzeitig, aber entgegengesetzt zueinander verschoben werden. Es ist natürlich insbesondere auch möglich, dass eines der beiden dispersiven Elemente feststeht und nur das jeweils andere dispersive Element verschoben wird.

Beispielsweise sind die beiden dispersiven Elemente jeweils in oder an einem Schlitten angeordnet, der über die Verstellvorrichtung bewegt werden kann. Insbesondere weist die Verstellvorrichtung eine manuell oder per Motor drehbare Antriebsstange mit einem Zahnkranz auf, der mit an den Schlitten befestigten Zahnstangen nach Art eines Zahnstangengetriebes zusammenwirkt. Selbstverständlich ist die Erfindung nicht auf einen bestimmten Mechanismus zum Bewegen der beiden dispersiven Elemente beschränkt, sondern es können z.B. auch andere Getriebe als das oben beschriebene Zahnstangengetriebe zum Einsatz kommen.

Vorzugsweise sind die dispersiven Elemente (um einen Betrag von mindestens 5 mm) stufenlos gegeneinander verschiebbar gelagert. Vorzugsweise sind die dispersiven Elemente derart gelagert, dass einander zugewandte Seitenflächen der dispersiven Elemente stets parallel zueinander ausgerichtet sind bzw. der Abstand zwischen den einander zugewandten Seitenflächen der dispersiven Elemente kleiner als 5 mm ist. Vorzugsweise ist der Keilwinkel beider Keile gleich groß bzw. beträgt der Keilwinkel der Keile zwischen 3° und 20°.

Vorzugsweise weist mindestens eine Seitenfläche des ersten dispersiven Elementes und/oder mindestens eine Seitenfläche des zweiten dispersiven Elementes eine Antireflexionsbeschichtung für elektromagnetische Strahlung im mittleren infraroten Spektralbereich auf. Vorzugsweise ist die Antireflexionsbeschichtung derart ausgebildet, dass die

Intensität von Reflexionen im mittleren infraroten Spektralbereich an der Seitenfläche des dispersiven Elementes unter einem Winkel bis 20° kleiner als 2 % beträgt. Vorzugsweise weisen die Seitenflächen der dispersiven Elemente jeweils eine gleichartige Antireflexionsbeschichtung auf, jedoch ist die Erfindung hierauf nicht beschränkt. Durch Antireflexbeschichtungen können die Reflexionsverluste pro Oberfläche unter 2 % gehalten werden (15 % Verlust bei 8 Oberflächen).

Ferner ist es bevorzugt, dass die genannten Reflexionseigenschaften der Antireflexionsbeschichtung über einen Bereich von mindestens 50 Wellenzahlen, noch bevorzugter mindestens 500 Wellenzahlen und noch bevorzugter mindestens 1000 Wellenzahlen vorliegen. Bei Verwendung des Pulsshapers in einem Infrarotlaser bezieht sich dieser Bereich auf die Zentralwellenlänge.

Vorzugsweise ist eine Halterung vorgesehen, mit der die dispersiven Elemente jeweils im Bereich ihrer Rückseite verbunden sind. Besonders bevorzugt sind die dispersiven Elemente derart in der Halterung fixiert, dass ihre einander zugewandten Seitenflächen sich in der Breite zwischen 5 % und 100 % teilweise gegenüberstehen. Weiterhin ist es bevorzugt, dass die dispersiven Elemente derart in der Halterung fixiert sind, dass ihre einander gegenüberstehenden Seitenflächen einen Überlapp von mehr als 12 mm in der Höhe aufweisen.

Vorzugsweise unterscheiden sich die Längen der Seitenflächen eines dispersiven Elementes in Form eines Keils um weniger als 10 %. Vorzugsweise unterscheiden sich die Längen der Seitenflächen des ersten Keils und die Längen der Seitenflächen des zweiten Keils um weniger als 10 %.

Es ist bevorzugt, dass ein Mittel zur simultanen Relativverschiebung der einzelnen dispersiven Elemente jeweils beider Paare um den gleichen Betrag vorgesehen ist. Ferner ist es bevorzugt, dass die dispersiven Elemente eines Paars derart gelagert sind, dass einander zugewandte Seitenflächen jeweils parallel zueinander ausgerichtet sind und/oder der Abstand zwischen den einander zugewandten Seitenflächen der dispersiven Elemente jeweils kleiner als 5 mm ist. Ferner ist es bevorzugt, dass die dispersiven Elemente eines Paars derart in der Halterung fixiert sind, dass ihre einander zugewandten Seitenflächen sich in der Breite zwischen 5% und 100% gegenüberstehen und/oder die dispersiven Elemente eines Paars derart in der Halterung fixiert sind, dass ihre einander gegenüberstehenden Seitenflächen jeweils einen Überlapp von mehr als 12 mm in der Höhe aufweisen.

Die Erfindung umfasst auch einen Laser, insbesondere einen Infrarotlaser, der ein aktives Medium und einen Resonator aufweist, wobei ein Pulsshaper nach mindestens einem der oben genannten Merkmale innerhalb des Resonators angeordnet ist. Es sind zwei Paare dispersiver Elemente vorgesehen und die dispersiven Elemente beider Paare sind z.B. derart angeordnet, dass jeweils dem anderen dispersiven Element eines Paars zugewandte Seitenflächen parallel zur einer Frontfacette und einer Rückfacette des Resonators (Resonator bestehend aus zwei zueinander parallel angeordneten Resonatorflächen) angeordnet sind. Vorzugsweise ist der Laser ein Pulslaser, besonders bevorzugt für ultrakurze Pulse.

Die Erfindung betrifft des Weiteren auch einen optisch parametrischen Oszillator, einen optisch parametrischen Verstärker oder ein nichtkollinearen optisch parametrischen Verstärker, der den erfindungsgemäßen Pulsshaper enthält, um einen gezielten Chirp im Strahlengang einzustellen. Durch den erfindungsgemäßen Pulsshaper wird der Strahlengang nicht verändert, da keine räumliche Dispersion der Strahlung auftritt und der gesamte Strahlenweg verkürzt. Vorzugsweise erzeugen die Oszillatoren oder Verstärker ultrakurze Lichtpulse im mittleren infraroten und nahen infraroten Spektralbereich. Durch den Einsatz von Metamaterialien oder speziellen Oxiden (MgO) ist der Einsatz auch im sichtbaren und ultravioletten Spektralbereich möglich.

Die Erfindung wird nachstehend anhand von in den Figuren näher dargestellten Ausführungsbeispielen erläutert. Es zeigen:

| | |
|---|---|
| Fig. 1 | einen nicht erfindungsgemäßen Pulsshaper für einen Infrarotlaser in schematischer, geschnittener Darstellung, |
| Fig. 2 | einen erfindungsgemäßen Pulsshaper für einen Infrarotlaser nach einem Ausführungsbeispiel in schematischer, geschnittener Darstellung, |
| Fig. 3 | die Dispersion der Gruppengeschwindigkeit ("group verlocity dispersion" oder auch GVD) für einen 7° ZnSe-Keil mit einer Dicke von 4 mm über einen Wellenlängenbereich von 1, 5 μm bis 4 μm, |
| Fig. 4 | die Dispersion der Gruppengeschwindigkeit für einen 7° $CaF_2$-Keil mit einer Dicke von 4 mm über einen Wellenlängenbereich von 1, 5 μm bis 4 μm, |
| Fig. 5 | die Dispersion der Gruppengeschwindigkeit für einen 7° Saphirkeil mit einer Dicke von 4 mm über einen Wellenlängenbereich von 1, 5 μm bis 4 μm, |
| Fig. 6A bis 6C | verschiedene Ansichten eines Pulsshapers gemäß einem weiteren Ausführungsbeispiel der Erfindung, und |
| Fig. 7 | eine perspektivische Ansicht des Pulsshapers aus den Fig. 6A bis 6C. |

Fig. 1 zeigt einen Pulsshaper für einen Laser, insbesondere einen Infrarotlaser, in schematischer, geschnittener Darstellung. Der Pulsshaper besteht aus zwei gegenläufig orientierten dispersiven Elementen in Form von Keilen 11, 12 mit unterschiedlicher oder gleicher optischer Dispersion. Durch gegenläufiges Verschieben der Keile (beispielsweise entlang der innen liegenden Seitenflächen 13) kann die (optische) Dicke der Keile 11, 12 für eine elektromagnetische Welle 17 unterschiedlich eingestellt werden. Es ist einerseits möglich, beide Keile 11, 12 gleichzeitig oder auch nur einen der beiden Keile 11, 12 zu verschieben.

Die GVD muss insbesondere bei breitbandigen Infrarotlasern (mit einer Emission um die Zentralwellenlänge in einem Bereich von mindestens 50 Wellenzahlen, noch bevorzugter mindestens 500 Wellenzahlen und noch bevorzugter mindestens 1000 Wellenzahlen) kompensiert werden, um ultrakurze Pulse (d.h. Pulse kleiner als 500 fs) erzeugen zu können. Wie in den Figuren 3-5 dargestellt ist, ist es möglich, z.B. mit einer Kombination aus ZnSe- (Fig. 3, positiver GVD-Parameter) und Saphirkeildicken (Fig. 5, negativer GVD-Parameter) beliebige (negative und positive) GVDs für einen Infrarotlichtimpuls im Bereich um 3000 nm (2000nm bis 5000 nm) einzustellen. Die Positionen der Keile 11, 12 und damit die (optischen) Dicken für die durch die Keile 11, 12 durchlaufende Strahlung 17 werden anhand der verwendeten Materialien sowie der Wellenlängen des Infrarotlasers festgelegt. Die Verwendung zweier Keile 11, 12 führt zu einem Strahlenversatz $\Delta y$, der im Falle von zwei zueinander parallel angeordneten Resonatorflächen jedoch unproblematisch ist. In den Fig. 3-5 wurde jeweils ein Keil mit einem Keilwinkel von 7° und einer Dicke von 4 mm (bezogen auf den Strahl 17) verwendet.

Für Wellenlängenbereiche von 5000 nm bis 9000 nm werden vorzugsweise die Materialien Germanium, Silizium und $CaF_2$ (bis 11000 nm $BaF_2$) verwendet.

Die Mechanik zur Halterung und Verschiebung der Keilplatten kann durch herkömmliche Vorrichtungen ausgebildet sein (z.B. Schrittmotoren etc). Vorzugsweise werden gleichzeitig beide Keile 11, 12 kontinuierlich gegeneinander verschoben. Der Infrarotstrahldurchmesser kann vorzugsweise bis zu 12 mm groß sein.

Fig. 2 zeigt einen erfindungsgemäßen Pulsshaper für einen Laser in schematischer, geschnittener Darstellung. Dieser Pulsshaper besteht aus zwei Paaren 15, 16 dispersiver Elemente, die jeweils zwei gegenläufig orientierte Keile 11, 12 aufweisen. Die Materialien der einzelnen Keilpaare weisen eine unterschiedliche optische Dispersion auf, obwohl dies nicht zwingend notwendig ist. Durch gegenläufiges Verschieben der Keile 11, 12 jeweils eines Keilpaars 15, 16 (beispielsweise entlang der innen liegenden Seitenflächen) kann die (optische) Dicke der Keilpaare 15, 16 für eine elektromagnetische Welle 17 unterschiedlich eingestellt werden. Vorteilhafterweise wird der Strahlenversatz ($\Delta y$ in Fig. 1) kompensiert oder nahezu kompensiert, so dass dieser Pulsshaper in einer größeren Anzahl von Kavitäten (z.B. ring cavity) verwendet werden kann. In Fig. 2 ist die Richtung der elektromagnetischen Welle 17 durch Pfeile veranschaulicht - es ist aber offensichtlich, dass die elektromagnetischen Strahlung 17 in einem Resonator mit zwei zueinander parallel angeordneten Resonatorflächen (Frontfacette und Rückfacette) in beide Richtungen verläuft.

Nach einer weiteren bevorzugten Variante ist eines der Keilpaare 15, 16 derart verkippt, dass die Strahlung des anderen Keilpaars senkrecht auf die erste Fläche des Keilpaars trifft, wodurch der Strahlversatz weiter minimiert werden kann.

Mit dem erfindungsgemäßen Pulsshaper kann bei geringen Energieverlusten die Intensitäten und Pulsdauern von Lichtimpulsen erhöht und erniedrigt werden, z.B. für die Verstärkung von Lichtimpulsen (prechirp) oder auch zur Dissoziation von Molekülen (upchirp oder downchirp).

Die Fig. 6A-C und 7 beziehen sich auf einen Pulsshaper 1 gemäß einem weiteren Ausführungsbeispiel der Erfindung, wobei Fig. 6A eine Schnittansicht, Fig. 6B eine Seitenansicht und Fig. 6C eine Vorderansicht des Pulsshapers zeigen. Fig. 7 ist eine perspektische Darstellung des Pulsshapers.

Der Pulsshaper 1 weist ein erstes dispersives Element in Form eines ersten Keils 11 aus einem ersten dispersiven Material und ein zweites dispersives Element in Form eines zweiten Keils 12 aus einem zweiten dispersiven Material auf, wobei die Keile 11, 12 jeweils so in einem Schlitten 111, 121 angeordnet sind, dass planare Seitenflächen 114, 115 der Keile einander zugewandt und parallel zueinander ausgerichtet sind.

Die Schlitten 111, 121 sind jeweils in einer ersten (unteren) Linearführung 112a bzw. 122a sowie in einer zweiten (oberen) Linearführung 112b bzw. 122b verschiebbar gelagert, wobei die unteren Linearführungen 112a, 122a an einer Bodenplatte 113 eines Rahmens des Pulsshapers und die oberen Linearführungen 112b, 122b an einer zur Bodenplatte 113 beabstandeten Oberseite des Rahmens angeordnet sind. Die Linearführungen 112a, 112b, in denen der erste Schlitten 111 gelagert ist, verlaufen parallel zu den Linearführungen 122a, 122b, in denen der zweiten Schlitten 121 gelagert ist, so dass die beiden Schlitten 111, 121 parallel zueinander verschiebbar sind.

Die Schlitten 111, 121 weisen zudem jeweils Öffnungen (Fenster) 1111, 1121 auf, die ein Durchstrahlen der Keile 11, 12 insbesondere in einer Richtung quer zur Verfahrrichtung der Schlitten 111, 121 ermöglichen.

Der Pulsshaper 1 umfasst darüber hinaus eine Verstellvorrichtung 3, über die die beiden Schlitten 111, 121 gleichzeitig in einander entgegengesetzter Richtung bewegt werden können. Die Verstellvorrichtung 3 umfasst ein Betätigungselement in Form einer Antriebsstange 31, die an einem oberen, aus dem Rahmen des Pulsshapers herausstehenden Ende einen gerändelten Griff 32 aufweist, über die sie manuell verdreht werden kann. Anstelle eines manuellen Antriebes kann die Antriebsstange natürlich auch per Motor gedreht werden, z.B. über einen elektrischen Schrittmotor.

Die Antriebsstange 31 weist einen Zahnkranz 33 auf, der in Zahnstangen 34a, 34b eingreift, die an dem ersten bzw. an dem zweiten Schlitten 111, 121 angeordnet sind. Ein Verdrehen der Antriebsstange 31 erzeugt somit ein gleichzeitiges Verschieben der Schlitten 111, 121 in einander entgegengesetzten Richtungen.

Der perspektiven Ansicht des Pulsshapers in Fig. 7 ist zu entnehmen, dass an der Bodenplatte 113 ein Verbindungselement in Form einer Befestigungsstange 5 montiert ist, über die der Pulsshaper z.B. an einem Labortisch fixiert werden kann. Hierfür weist die Bodenplatte z.B. eine Gewindebohrung auf. Selbstverständlich kann der Pulsshaper auch andere Befestigungsmittel zum Verbinden mit einem optischen Aufbau aufweisen, z.B. Rastelemente.

**Bezugszeichenliste**

| | |
|---|---|
| 1 | Pulsshaper |
| 3 | Verstellvorrichtung |
| 5 | Befestigungsstange |
| 11 | erster Keil |
| 12 | zweiter Keil |
| 13 | Seitenfläche |
| 14 | Rückseite |
| 15 | erstes Keilpaar |
| 16 | zweites Keilpaar |
| 17 | elektromagnetische Welle |
| 31 | Antriebsstange |
| 32 | Griff |
| 33 | Zahnkranz |
| 34a, 34b | Zahnstange |
| 111 | erster Schlitten |
| 112a, 122a | erste Linearführung |
| 112b, 122b | zweite Linearführung |
| 113 | Bodenplatte |
| 114, 115 | Seitenfläche |
| 121 | zweiter Schlitten |
| 1111, 1121 | Fenster |
| $\Delta y$ | Versatz |

**Patentansprüche**

1. Pulsshaper zur Kompensation von Gruppenlaufzeiteffekten, mit:

    - einem ersten und einem zweiten dispersiven Element, wobei
    - ein optischer Puls entlang einer Einkoppelrichtung so in den Pulsshaper (1) eingekoppelt wird, dass er nach Durchlaufen des ersten und des zweiten dispersiven Elementes entlang einer Austrittsrichtung aus dem Pulsshaper austritt, und
    - das erste und das zweite dispersive Element so ausgebildet und relativ zueinander bewegbar angeordnet sind, dass die von dem optischen Puls nach Einkoppeln in den Pulsshaper durch das erste und das zweite dispersive Element hindurch zurückzulegende Weglänge einstellbar ist, ohne dass ein durch die Dispersionseigenschaften des ersten und das zweiten dispersiven Elementes bedingter Versatz (Δy) zwischen der Einkoppelrichtung und der Austrittsrichtung verändert wird,
- wobei das erste und das zweite dispersive Element jeweils in Form eines Keils (11, 12) ausgebildet sind,

**dadurch gekennzeichnet,**
**dass** das erste und das zweite dispersive Element so angeordnet sind, dass die Form des optischen Pulses beim Durchlaufen des Pulsshapers (1) eine Veränderung erfährt, die hauptsächlich oder ausschließlich durch die beim Durchlaufen des ersten und/oder des zweiten dispersiven Elementes auftretende Gruppengeschwindigkeitsdispersion hervorgerufen wird, wobei das erste und das zweite dispersive Element ein erstes Paar (15) bilden und der Pulsshaper (1) zudem ein zweites Paar (16) jeweils in Form eines Keils ausgebildeter dispersiver Elemente aufweist.

**2.** Pulsshaper nach Anspruch 1, **dadurch gekennzeichnet, dass** das erste dispersive Element ein erstes dispersives Material und das zweite dispersive Element ein zweites dispersives Material aufweist, wobei die optische Dispersion des ersten Materials der optischen Dispersion des zweiten Materials entspricht.

**3.** Pulsshaper nach Anspruch 1 oder 2, **dadurch gekennzeichnet, dass** das erste dispersive Element ein erstes dispersives Material und das zweite dispersive Element ein zweites dispersives Material aufweist, wobei sich die optische Dispersion des ersten Materials von der optischen Dispersion des zweiten Materials unterscheidet.

**4.** Pulsshaper nach einem der vorhergehenden Ansprüche, **dadurch gekennzeichnet, dass** das erste und/oder das zweite dispersive Element ein positiv dispersives Material aufweist.

**5.** Pulsshaper nach einem der vorhergehenden Ansprüche, **dadurch gekennzeichnet, dass** das erste und/oder das zweite dispersive Element ein negativ dispersives Material aufweist.

**6.** Pulsshaper nach einem der vorhergehenden Ansprüche, **dadurch gekennzeichnet, dass** das erste und das zweite dispersive Element mit einem derart geringen Abstand zueinander angeordnet sind, dass nach Durchlaufen des ersten und des zweiten dispersive Elementes unterschiedliche Wellenlängenanteile des optischen Pulses einen räumlichen Versatz (Δy) zueinander aufweisen, der kleiner als der räumliche Durchmesser des optischen Pulses ist.

**7.** Pulsshaper nach einem der vorhergehenden Ansprüche, **dadurch gekennzeichnet, dass** der größte Abstand zwischen dem ersten und dem zweiten dispersiven Element maximal 20 cm, insbesondere maximal 30 mm, beträgt.

**8.** Pulsshaper nach einem der vorhergehenden Ansprüche, **gekennzeichnet durch** eine Verstellvorrichtung (3), über die das erste und/oder das zweite dispersive Element bewegt werden können, wobei das erste und das zweite dispersive Element über die Verstellvorrichtung (3) gleichzeitig in einander entgegengesetzte Richtungen bewegt werden können.

**9.** Pulsshaper nach einem der vorhergehenden Ansprüche, **dadurch gekennzeichnet, dass** die dispersiven Elemente derart gelagert sind, dass einander zugewandte Seitenflächen (13) der dispersiven Elemente stets parallel zueinander ausgerichtet sind und/oder der Abstand zwischen den einander zugewandten Seitenflächen (13) der dispersiven Elemente kleiner als 5 mm ist.

**10.** Pulsshaper nach einem der vorhergehenden Ansprüche, **dadurch gekennzeichnet, dass** die optische Dispersion des Materials der dispersiven Element eines der Paare (15, 16) jeweils gleich ist, wobei sich jedoch die optische Dispersion des Materials der dispersive Elemente des ersten Paares (15) von der optischen Dispersion des Materials der dispersiven Elemente des zweiten Paars (16) unterscheidet.

**11.** Laser, insbesondere Infrarotlaser, aufweisend ein aktives Medium und einen Resonator, **dadurch gekennzeichnet, dass** ein Pulsshaper nach einem der Patentansprüche 1-10 innerhalb des Resonators angeordnet ist.

**12.** Laser nach Anspruch 11, **dadurch gekennzeichnet, dass** die dispersiven Elemente beider Paare (15, 16) derart angeordnet sind, dass jeweils dem anderen dispersiven Element eines Paars (15, 16) zugewandte Seitenflächen (13) parallel zur einer Frontfacette und einer Rückfacette des Resonators angeordnet sind.

**13.** Optisch parametrischer Verstärker oder optisch parametrischer Oszillator, aufweisend einen nichtlinearen Kristall, einen Pumpstrahl, einen Seedstrahl und einen erzeugten Strahl, **dadurch gekennzeichnet, dass** ein Pulsshaper nach einem der Patentansprüche 1-10 im Strahlengang des Pumpstrahls, des Seedstrahls oder des erzeugten Strahles angeordnet ist.

## Claims

1. A pulse shaper for compensating group runtime effects, comprising:

   - a first and a second dispersive element, wherein
   - an optical pulse is coupled to the pulse shaper (1) along a coupling direction such that said pulse exits from the pulse shaper after passing through the first and the second dispersive element along an exit direction, and
   - the first and the second dispersive element are formed and arranged to be movable relative to each other such that the path length to be traversed by the optical pulse through the first and the second dispersive element after coupling to the pulse shaper can be adjusted without any change in an offset (Δy) between the coupling direction and the exit direction caused by the dispersion properties of the first and the second dispersive element,
   - wherein the first and the second dispersive element each are formed in the shape of a wedge (11, 12),

   **characterized in**
   **that** the first and the second dispersive element are arranged in such a way that the shape of the optical pulse experiences a change as the pulse travels through the pulse shaper (1), which is caused mainly or exclusively by the group velocity dispersion occurring during passage through the first and/or the second dispersive element, wherein the first and the second dispersive element form a first pair (15) and the pulse shaper (1) in addition includes a second pair (16) of dispersive elements.

2. The pulse shaper according to claim 1, **characterized in that** the first dispersive element includes a first dispersive material and the second dispersive element includes a second dispersive material, wherein the optical dispersion of the first material corresponds to the optical dispersion of the second material.

3. The pulse shaper according to claim 1 or 2, **characterized in that** the first dispersive element includes a first dispersive material and the second dispersive element includes a second dispersive material, wherein the optical dispersion of the first material differs from the optical dispersion of the second material.

4. The pulse shaper according to any of the preceding claims, **characterized in that** the first and/or the second dispersive element includes a positively dispersive material.

5. The pulse shaper according to any of the preceding claims, **characterized in that** the first and/or the second dispersive element includes a negatively dispersive material.

6. The pulse shaper according to any of the preceding claims, **characterized in that** the first and the second dispersive element are arranged with such a small distance to each other that after passing through the first and the second dispersive element different wavelength components of the optical pulse have a spatial offset (Δy) relative to each other, which is smaller than the spatial diameter of the optical pulse.

7. The pulse shaper according to any of the preceding claims, **characterized in that** the greatest distance between the first and the second dispersive element is not more than 20 cm, in particular not more than 30 mm.

8. The pulse shaper according to any of the preceding claims, **characterized by** an adjusting device (3) by means of which the first and/or the second element can be moved, wherein the first and the second dispersive element simultaneously can be moved in opposite directions by means of the adjusting device (3).

9. The pulse shaper according to any of the preceding claims, **characterized in that** the dispersive elements are mounted such that side faces (13) of the dispersive elements facing each other always are aligned parallel to each other and/or the distance between the side faces (13) of the dispersive elements facing each other is smaller than 5 mm.

10. The pulse shaper according to any of the preceding claims, **characterized in that** the optical dispersion of the material of the dispersive elements of one of the pairs (15, 16) each is the same, but the optical dispersion of the material of the dispersive elements of the first pair (15) differs from the optical dispersion of the material of the dispersive elements of the second pair (16).

11. A laser, in particular an infrared laser, including an active medium and a resonator, **characterized in that** a pulse shaper according to any of claims 1 to 10 is arranged inside the resonator.

12. The laser according to claim 11, **characterized in that** the dispersive elements of both pairs (15, 16) are arranged such that side faces (13) each facing the other dispersive element of a pair (15, 16) are arranged parallel to a front facet and a rear facet of the resonator.

**13.** An optical parametric amplifier or optical parametric oscillator, including a non-linear crystal, a pump beam, a seed beam and a generated beam, **characterized in that** a pulse shaper according to any of claims 1 to 10 is arranged in the beam path of the pump beam, of the seed beam or of the generated beam.

## Revendications

**1.** Formateur d'impulsions servant à compenser des effets de temps de propagation de groupe, avec :

- un premier et un deuxième élément dispersif, dans lequel
- une impulsion optique est injectée le long d'une direction d'injection de telle sorte dans le formateur d'impulsions (1) qu'elle sort du formateur d'impulsions le long d'une direction de sortie après avoir traversé le premier et le deuxième élément dispersif, et
- le premier et le deuxième élément dispersif sont réalisés et sont disposés de manière à pouvoir être déplacés l'un par rapport à l'autre de telle sorte que la longueur de trajet à parcourir par l'impulsion optique après l'injection dans le formateur d'impulsions à travers le premier et le deuxième élément dispersif peut être réglée sans qu'un décalage ($\Delta y$) lié aux propriétés de dispersion du premier et du deuxième élément dispersif entre la direction d'injection et la direction de sortie ne soit modifié,
- dans lequel le premier et le deuxième élément dispersif sont réalisés respectivement sous la forme d'un coin (11, 12),

**caractérisé en ce que** le premier et le deuxième élément dispersif sont disposés de telle sorte que la forme de l'impulsion optique subit lors de la traversée du formateur d'impulsions (1) une modification, qui est provoquée principalement ou exclusivement par la dispersion de vitesse de groupe apparaissant lors de la traversée du premier et/ou du deuxième élément dispersif, dans lequel le premier et le deuxième élément dispersif forment une première paire (15) et le formateur d'impulsions (1) présente de plus une deuxième paire (16) respectivement sous la forme d'éléments dispersifs réalisés sous la forme d'un coin.

**2.** Formateur d'impulsions selon la revendication 1, **caractérisé en ce que** le premier élément dispersif présente un premier matériau dispersif et le deuxième élément dispersif présente un deuxième matériau dispersif, dans lequel la dispersion optique du premier matériau correspond à la dispersion optique du deuxième matériau.

**3.** Formateur d'impulsions selon la revendication 1 ou 2, **caractérisé en ce que** le premier élément dispersif présente un premier matériau dispersif et le deuxième élément dispersif présente un deuxième matériau dispersif, dans lequel la dispersion optique du premier matériau se distingue de la dispersion optique du deuxième matériau.

**4.** Formateur d'impulsions selon l'une quelconque des revendications précédentes, **caractérisé en ce que** le premier et/ou le deuxième élément dispersif présentent un matériau à dispersion positive.

**5.** Formateur d'impulsions selon l'une quelconque des revendications précédentes, **caractérisé en ce que** le premier et/ou le deuxième élément dispersif présentent un matériau à dispersion négative.

**6.** Formateur d'impulsions selon l'une quelconque des revendications précédentes, **caractérisé en ce que** le premier et le deuxième élément dispersif sont disposés l'un par rapport à l'autre à une faible distance telle qu'après la traversée du premier et du deuxième élément dispersif, des parties de longueurs d'onde différentes de l'impulsion optique présentent un décalage ($\Delta y$) spatial les unes par rapport aux autres, qui est inférieur au diamètre spatial de l'impulsion optique.

**7.** Formateur d'impulsions selon l'une quelconque des revendications précédentes, **caractérisé en ce que** la distance la plus grande entre le premier et le deuxième élément dispersif est au maximum de 20 cm, en particulier au maximum de 30 mm.

**8.** Formateur d'impulsions selon l'une quelconque des revendications précédentes, **caractérisé par** un dispositif d'ajustement (3), par l'intermédiaire duquel le premier et/ou le deuxième élément dispersif peuvent être déplacés, dans lequel le premier et le deuxième élément dispersif peuvent être déplacés de manière simultanée dans des directions opposées les unes aux autres par l'intermédiaire du dispositif d'ajustement (3).

**9.** Formateur d'impulsions selon l'une quelconque des revendications précédentes, **caractérisé en ce que** les éléments dispersifs sont montés de telle manière que des faces latérales (13) tournées les unes vers les autres des éléments dispersifs sont systématiquement orientées de manière parallèle les unes par rapport aux autres, et/ou la distance entre les faces latérales (13) tournées les unes vers les autres des éléments dispersifs est inférieure à 5 mm.

**10.** Formateur d'impulsions selon l'une quelconque des revendications précédentes, **caractérisé en ce que** la dispersion optique du matériau des éléments dispersifs d'une des paires (15, 16) est respectivement identique, dans lequel toutefois la dispersion optique du matériau des éléments dispersifs de la première paire (15) se distingue de la dispersion optique du matériau des éléments dispersifs de la deuxième paire (16).

**11.** Laser, en particulier laser infrarouge, présentant un milieu actif et un résonateur, **caractérisé en ce qu'**un formateur d'impulsions selon l'une quelconque des revendications 1 à 10 est disposé à l'intérieur du résonateur.

**12.** Laser selon la revendication 11, **caractérisé en ce que** les éléments dispersifs des deux paires (15, 16) sont disposés de telle manière que des faces latérales (13) tournées respectivement vers l'autre élément dispersif d'une paire (15, 16) sont disposées de manière parallèle par rapport à une facette frontale et une facette arrière du résonateur.

**13.** Amplificateur paramétrique optique ou oscillateur paramétrique optique, présentant un cristal non linéaire, un rayon pompé, un rayon d'ensemencement et un rayon généré, **caractérisé en ce qu'**un formateur d'impulsions selon l'une quelconque des revendications 1 à 10 est disposé sur le chemin optique du rayon pompé, du rayon d'ensemencement ou du rayon généré.

FIG 1

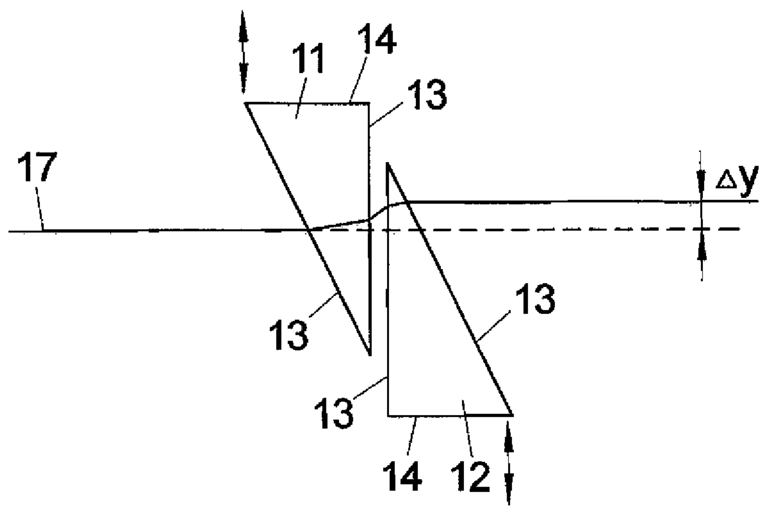


FIG 2

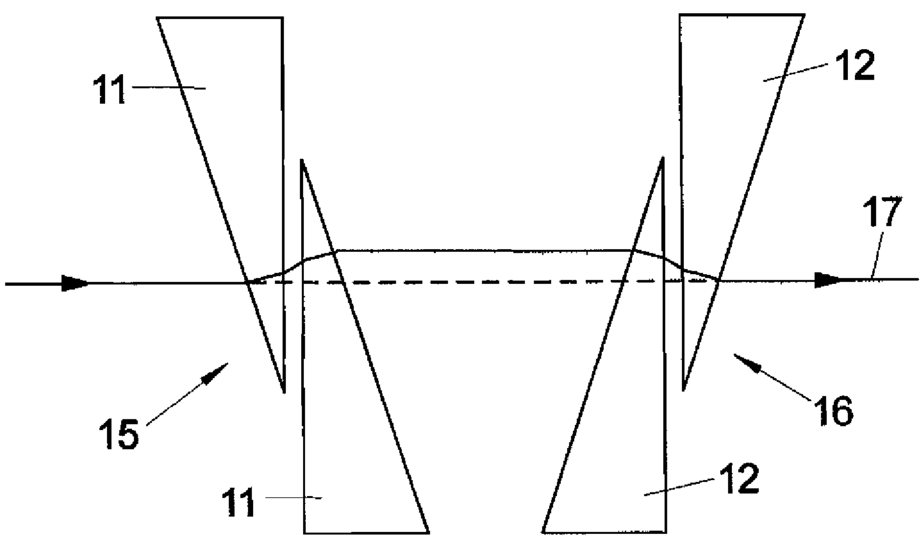

FIG 3

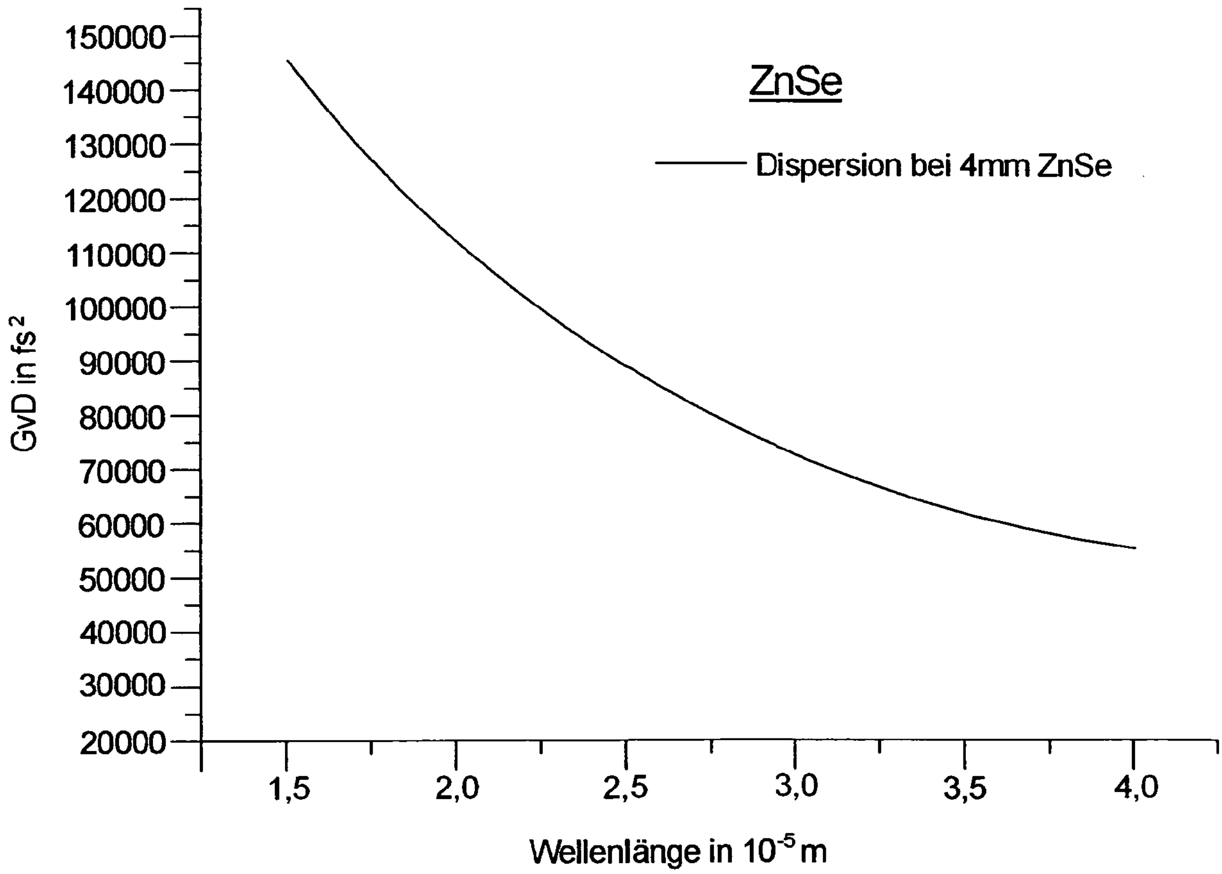
150000
140000
130000
120000
110000
100000
90000
80000
70000
60000
50000
40000
30000
20000
GvD in fs²
ZnSe
Dispersion bei 4mm ZnSe
1,5
2,0
2,5
3,0
3,5
4,0
Wellenlänge in 10⁻⁵ m

FIG 4

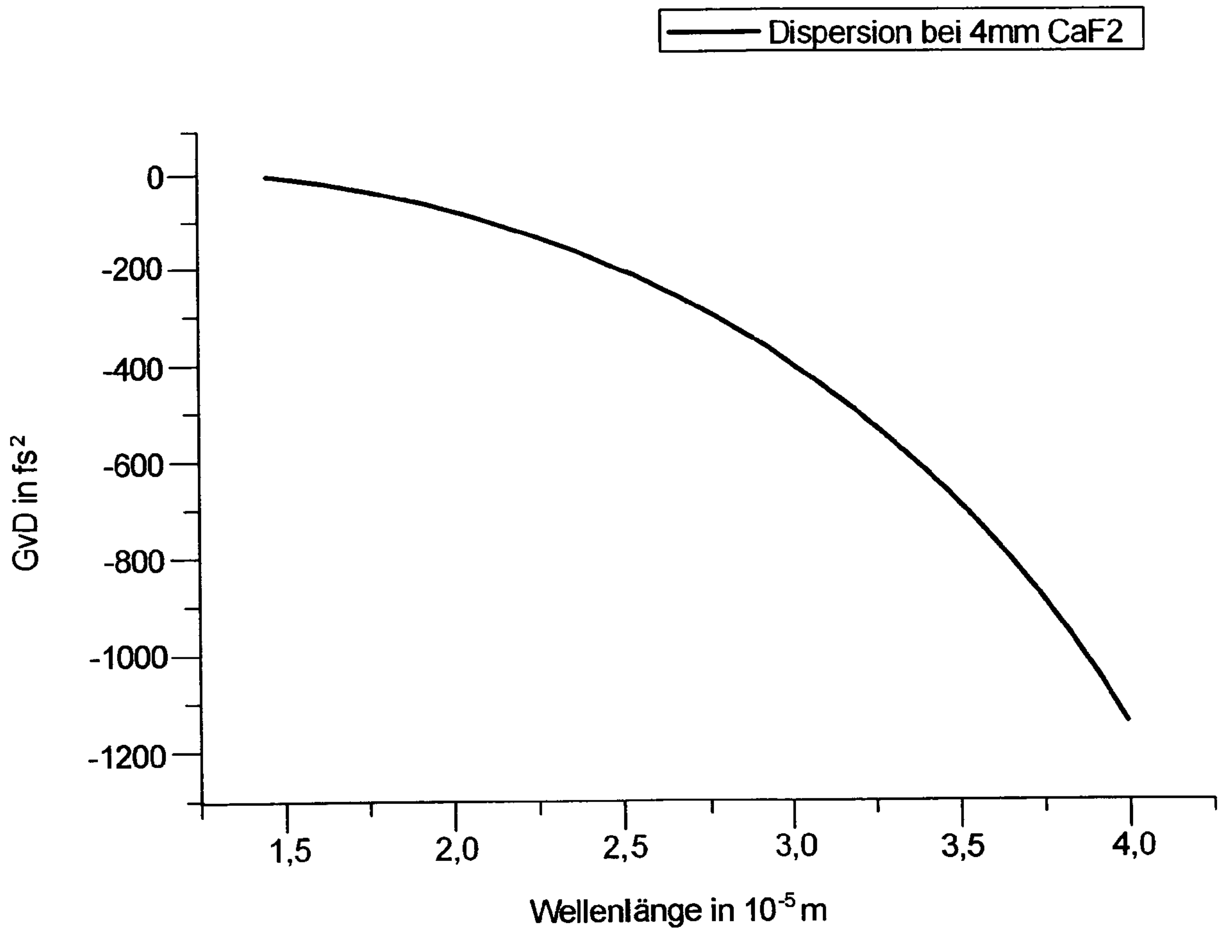
Dispersion bei 4mm CaF2
0
-200
-400
-600
-800
-1000
-1200
GvD in fs²
1,5
2,0
2,5
3,0
3,5
4,0
Wellenlänge in 10⁻⁵ m

FIG 5

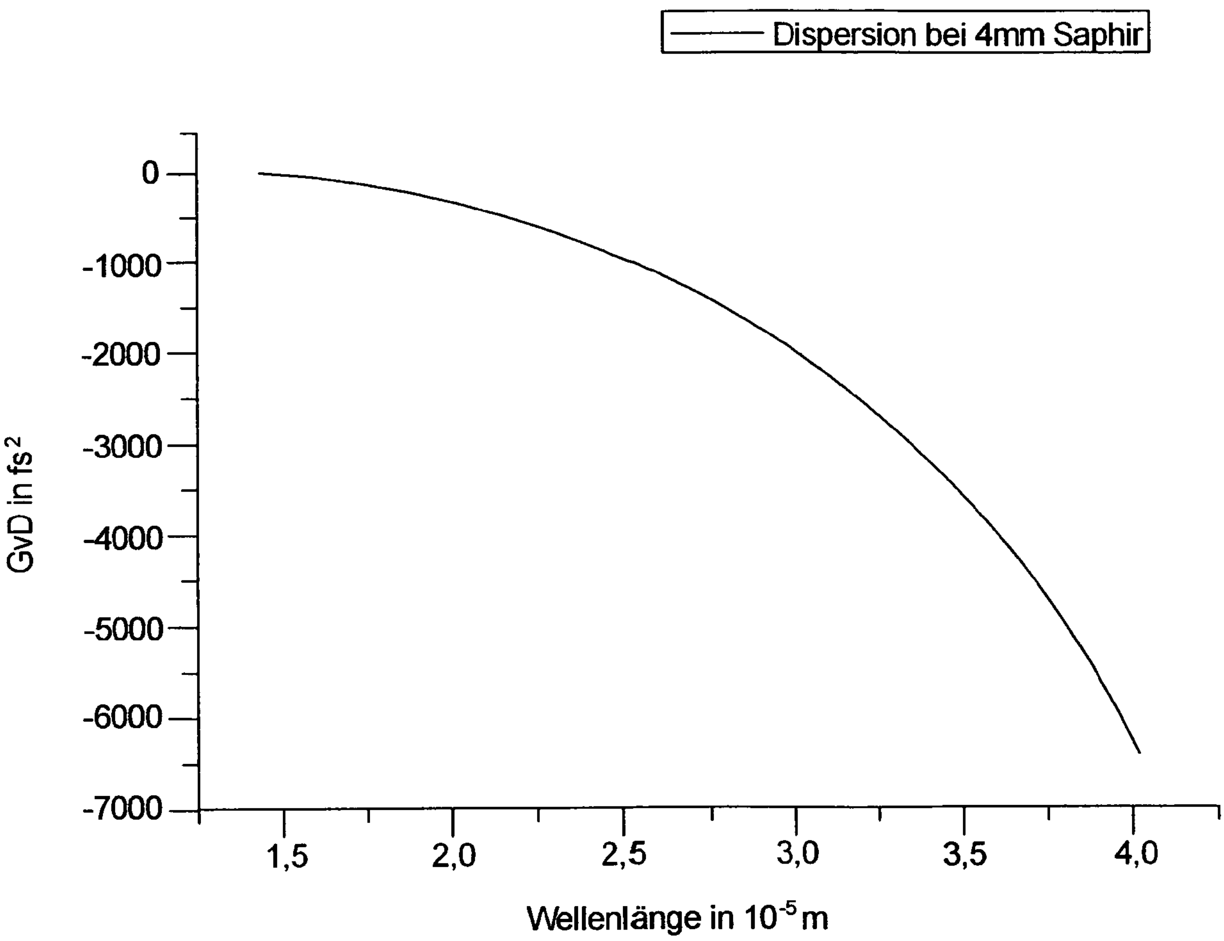
Dispersion bei 4mm Saphir
0
-1000
-2000
-3000
-4000
-5000
-6000
-7000
GvD in fs²
1,5
2,0
2,5
3,0
3,5
4,0
Wellenlänge in 10⁻⁵ m

FIG 6C

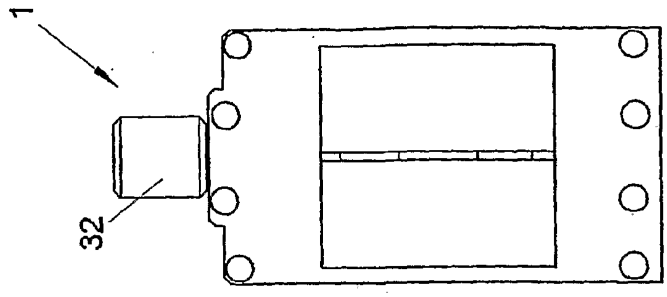


FIG 6B

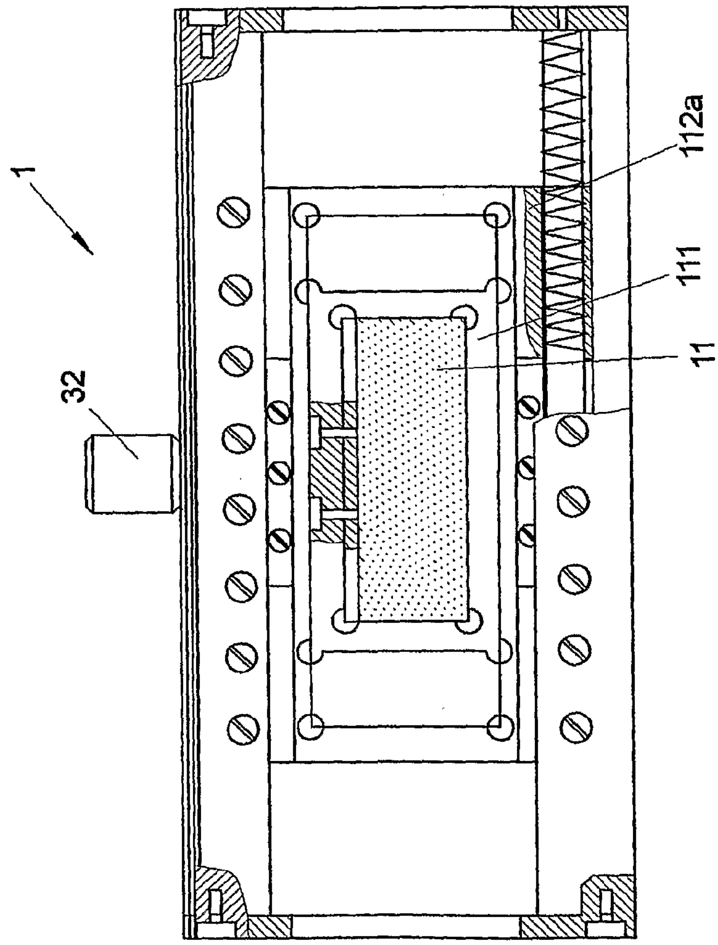


FIG 6A

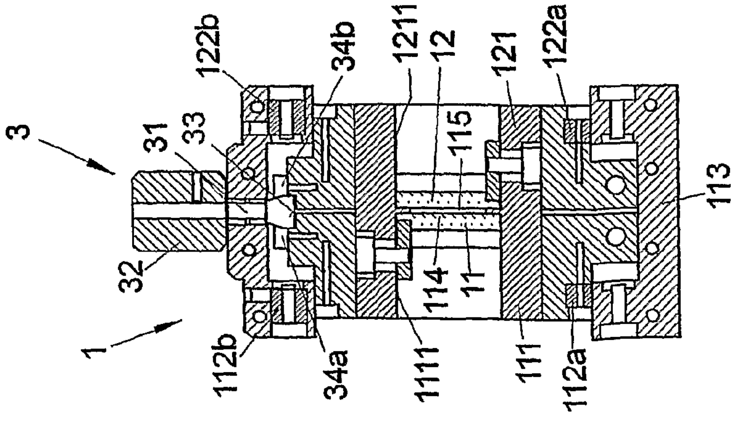

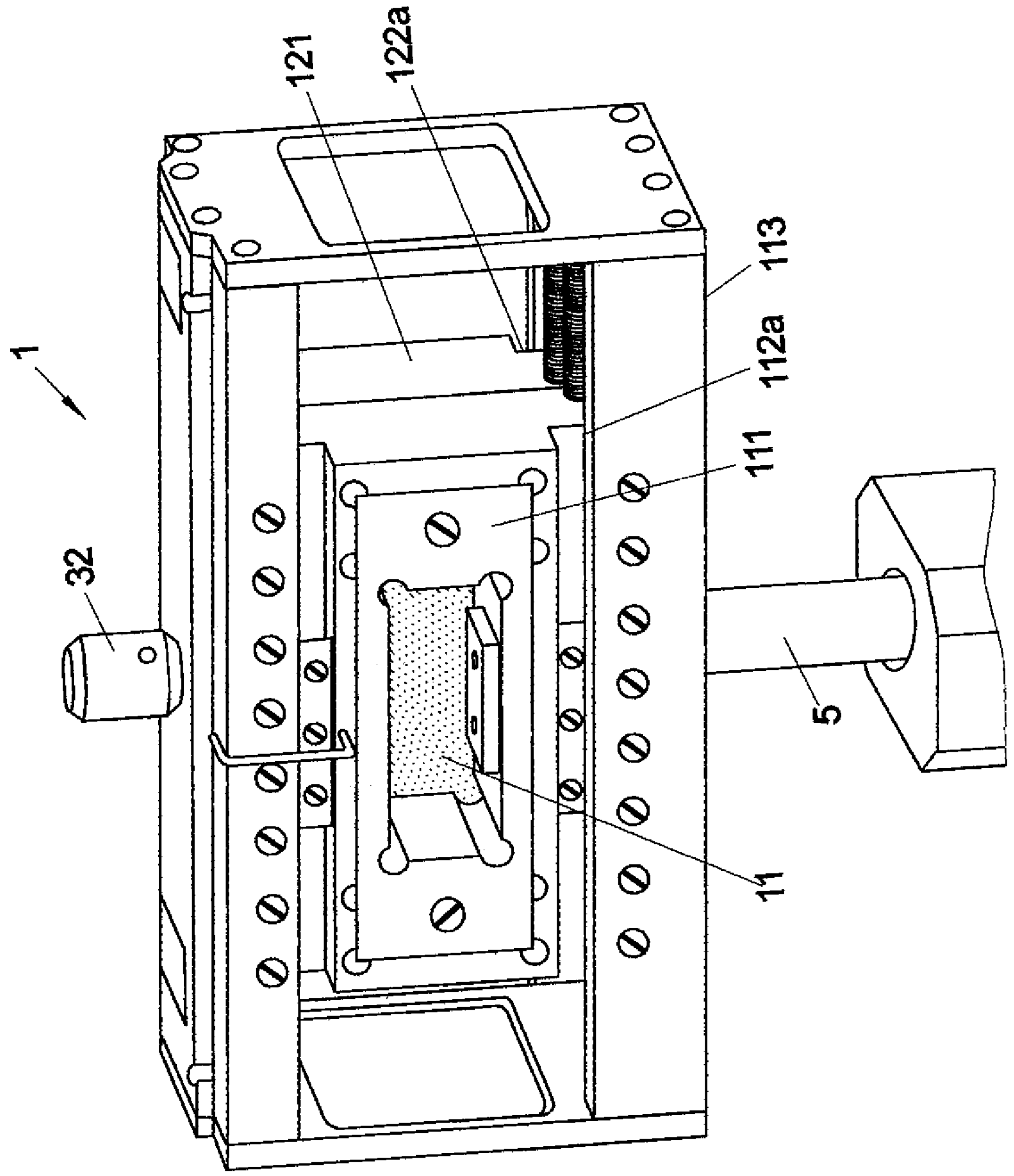


FIG 7

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1237308 A2
- US 20020024015 A1
- US 5513194 A


### In der Beschreibung aufgeführte Nicht-Patentliteratur


- **C.J. FECKO et al.** *Optics Communications,* 2004, vol. 241, 521-528